# EUROPÄISCHE PATENTANMELDUNG

(11) **EP 1 243 793 A2**
(43) Veröffentlichungstag der Anmeldung: **25.09.2002**
(21) Anmeldenummer: 02004798.1
(22) Anmeldetag: 02.03.2002
(51) Int. Cl.: F03G 7/06

(54) **Stellelement, insbesondere als Teil eines Stellantriebs für eine Bildaufnahmeeinrichtung**

(30) Priorität: 24.03.2001 DE 10114563
(71) Anmelder: Conti Temic Microelectronic GmbH, 90411 Nürnberg (DE)
(72) Erfinder: Bärenweiler, Josef, 90513 Zirndorf (DE); Fendt, Günter, 86529 Schrobenhausen (DE); Riedel, Helmut, Dr., 82256 Fürstenfeldbruck (DE)
(74) Vertreter: Kolb, Georg

(57) **Zusammenfassung**

1. Stellelement, insbesondere als Teil eines Stellantriebs für eine Bildaufnahmeeinrichtung
**2.1.** Bekannte Stellantriebe geben während des Einstellvorgangs Geräusche von sich, was beispielsweise von Fahrzeuginsassen als störend empfunden wird, insbesondere deshalb, weil Abgleich- oder Kalibrierungsvorgänge in der Regel kurz vor oder beim Belegen eines Sitzes, also bei einem vergleichsweise niedrigem Geräuschniveau noch vor dem Starten des Motors und vor Fahrbeginn, vorgenommen werden.
**2.2.** Stellelement, insbesondere als Teil eines Stellantriebs für eine Bildaufnahmeeinrichtung mit einem Bilderfassungssystem, dadurch gekennzeichnet, dass sich die Ausrichtung der Bildaufnahmeeinrichtung auf ein Objekt verändern lässt, dass das Stellelement aus zwei Memory-Elementen mit Einweg-Effekt und wenigstens einem Thermobimetall-Teil besteht, wobei die Memory-Elemente und das wenigstens eine Thermobimetall-Teil einzeln beheizbar sind und dass die Auslenkung der Memory-Elemente beim Beheizen entgegen gesetzt gerichtet ist.
**2.3.** Geräuschloses und kostengünstiges Stellelement (Aktor) aus einer Memorymetall-Thermobimetall-Kombination, das als Teil eines Stellantriebs beispielsweise zur schnellen und dynamischen Feinjustage der Ausrichtung einer Bildaufnahmeeinrichtungen für die Sitzbelegungserkennung in einem Fahrzeug geeignet ist.

## Beschreibung

Die Erfindung betrifft ein Stellelement, insbesondere als Teil eines Stellantriebs für eine Bildaufnahmeeinrichtung, nach dem Oberbegriff des Patentanspruchs 1.

In der Automobilindustrie fordert der Markt zunehmend verbesserte Insassenschutzsysteme, bei denen beispielsweise ein Prallkissen (Airbag) nur dann ausgelöst wird, wenn ein Fahrzeugsitz mit einer Person ab einer bestimmten Größe und ab einem bestimmten Gewicht besetzt ist und der Insasse eine korrekte Sitzposition einnimmt. Zudem wird gefordert, den Füllgrad eines Prallkissens (Airbag) von der Größe und vom Gewicht oder auch von der Schwere eines Aufpralls abhängig zu machen. Weiterhin darf ein Prallkissen (Airbag) nicht auslösen, wenn zum Beispiel auf dem Beifahrersitz ein Kindersitz mit einem Kleinkind darin befestigt ist, da dadurch das Leben des Kindes bedroht sein kann.

Mit herkömmlichen Systemen kann die Belegung eines Fahrzeugsitzes nicht eindeutig erkannt werden; beispielsweise kann eine Sitzmatte nicht eindeutig zwischen einer leichten Person und einem Kind in einem Kindersitz unterscheiden, obwohl dieser Unterschied für die Auslösung von Insassenschutzsystemen relevant sein kann. Daher werden zur Sitzbelegungserkennung mehr und mehr Bildaufnahmeeinrichtungen mit nachgeschalteten Bildverarbeitungssystemen verwendet (wie beispielsweise in DE 197 57 595 A1 beschrieben), verstärkt auch Stereosysteme. Die dabei verwendeten Bildaufnahmeeinrichtungen müssen allerdings sehr exakt justiert sein und in bestimmten Zeitabständen zur Kalibrierung oder zum Abgleich beispielsweise auf bestimmte Fix- oder Referenzpunkte ausgerichtet werden, wofür ein Stellantrieb notwendig ist.

Ein Stellantrieb für Bildaufnahmeeinrichtungen nach dem Stand der Technik ist beispielsweise aus der europäischen Patentschrift EP 0 485 302 B1 bekannt. Bei dem in dieser Schrift genannten Stellantrieb wird ein Getriebe zur Ausschnittsveränderung (Zoom) oder zur Scharfeinstellung durch einen elektrischen Motor, insbesondere durch einen Schrittmotor angetrieben.

Derartige Stellantriebe weisen jedoch den Nachteil auf, dass sie während des Einstellvorgangs Geräusche von sich geben, was innerhalb eines Fahrzeugs von den Insassen als störend empfunden wird, insbesondere deshalb, weil Abgleichoder Kalibrierungsvorgänge in der Regel kurz vor oder beim Belegen eines Sitzes, also bei einem vergleichsweise niedrigem Geräuschniveau noch vor dem Starten des Motors und vor Fahrbeginn, vorgenommen werden.

Formgedächtnislegierungen, sogenannte Memorymetalle oder Memory-Elemente, sind bekannt und werden, wie beispielsweise in der DE 39 18 499 A1 gezeigt, in Verbindung mit Sicherheitsventilen eingesetzt, um ein Absperrelement von einer elastischen Schlauchleitungen wegzuziehen und damit den Durchfluss von Gasen oder Flüssigkeiten durch die Schlauchverbindung freizugeben.

Ebenfalls bekannt sind Thermobimetalle, deren nicht fixiertes Ende sich beim Beheizen auslenkt und die beispielsweise in Leistungsschutzschaltern als thermische Auslöser eingesetzt werden, wie dies in der deutschen Offenlegungsschrift DE 43 00 909 A1 beschrieben ist. Weitere Eigenschaften und Besonderheiten von Thermobimetallen und Memory-Elementen sind in dem Artikel "Vergleich der Eigenschaften von Thermobimetallen und Memory-Elementen" der Zeitschrift METALL, Internationale Zeitschrift für Technik und Wirtschaft, Heft 1, 41. Jahrgang 1987, Seite 26 ff,

Der Erfindung liegt die Aufgabe zugrunde, ein Stellelement für einen Stellantrieb nach dem Oberbegriff des Patentanspruchs 1 so zu gestalten, dass keine störenden Geräusche vom Stellantrieb ausgehen.

Gelöst wird diese Aufgabe durch eine Anordnung mit den im Patentanspruch 1 angegebenen Merkmalen.

Der Gegenstand des Anspruchs 1 weist die Vorteile auf, dass bei Abgleich- oder bei Kalibrierungsvorgängen keine störenden und irritierenden Geräusche auftreten. Aufgrund der Temperatur-Ausbiegungs-Charakteristik des Thermobimetalls kann eine sehr präzise und feinfühlige Einstellung vorgenommen werden. Ein weiterer Vorteil liegt darin, dass im Vergleich zu elektrischen Motoren, insbesondere Schrittmotoren und deren Ansteuerelektronik, keine elektromagnetische Störstrahlung erzeugt wird und daher mit Aufwand und Kosten verbundene Abschirmmaßnahmen entfallen können.

Die Erfindung eignet sich insbesondere als Teil eines Stellantriebs für eine Bildaufnahmeeinrichtung, die in Fahrzeugen beispielsweise zur Sitzbelegungserkennung eingesetzt wird.

Vorteilhafte Ausgestaltungen des Gegenstands nach Anspruch 1 sind in den Unteransprüchen angegeben.

Die Erfindung wird nun anhand eines Ausführungsbeispiels unter Zuhilfenahme der Zeichnung erläutert.

Es zeigen
- Fig. 1a:: einen ersten erfindungsgemäßen Aktor als Stellelement für einen Stellantrieb in Ausgangsstellung,
- Fig. 1b:: den ersten erfindungsgemäßen Aktor gemäß Fig. 1a in zwei ausgelenkten Stellungen,
- Fig. 1c:: einen zweiten erfindungsgemäßen Aktor als Stellelement für einen Stellantrieb in Ausgangsstellung,
- Fig. 1d:: den zweiten erfindungsgemäßen Aktor gemäß Fig. 1c in zwei ausgelenkten Stellungen,
- Fig. 2:: ein erstes Anwendungsbeispiel für den erfindungsgemäßen Aktor eines Stellantriebs für eine Bildaufnahmeeinrichtung und
- Fig. 3:: ein zweites Anwendungsbeispiel für den erfindungsgemäßen Aktor eines Stellantriebs für eine Bildaufnahmeeinrichtung.

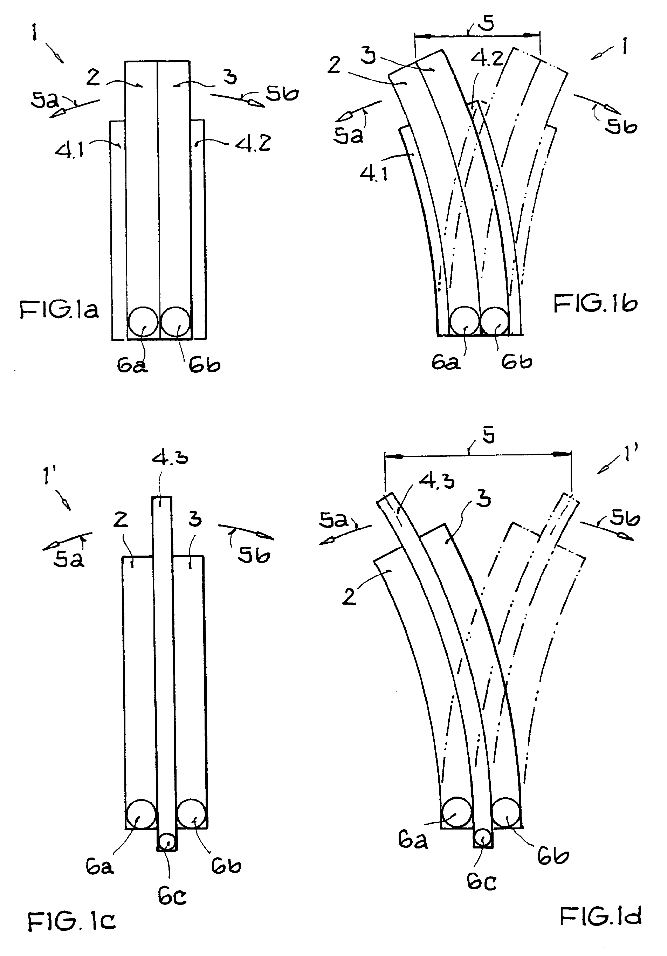

**Fig. 1a** und **Fig. 1b** zeigen einen ersten erfindungsgemäßen Aktor (Stellelement) 1 als Teil eines Stellantriebs, wobei Fig. 1a den Aktor 1 in seiner Ausgangsstellung zeigt und Fig. 1b den Aktor **1** in zwei ausgelenkten Stellungen. Der Aktor **1** besteht aus einem ersten Memory-Element **2** und einem zweiten Memory-Element **3.** Beide Memory-Elemente **2** und **3** sind auf geeignete Weise mit einander verbunden und können entweder aus einer bekannten Nickel-Titan-Kupfer-Legierung zusammen gesetzt sein, wie sie beispielsweise in der deutschen Offenlegungsschrift DE 38 02 919 A1 beschrieben ist, oder aus einer anderen geeigneten Legierung, zum Beispiel einer Nickel-Titan-Legierung.

Bei beiden Memory-Elementen **2** und **3** handelt es sich um sogenannte Memorymetalle mit Einwegeffekt, was bedeutet, dass eine nach einer Erwärmung erfolgte Abkühlung keine weitere Formänderung bewirkt. Dies hat den Vorteil, dass die Wärmezufuhr nicht dauerhaft, sondern nur bei einer gewünschten Formänderung erfolgen muss. Jedes Memory-Element **2** bzw. **3** ist einzeln direkt oder indirekt, beispielsweise durch ein (nicht dargestelltes) Heizelement, beheizbar. Bei einer Erwärmung erfolgt bei den Memory-Elementen **2** und **3** innerhalb eines kleinen Temperaturintervalls eine nahezu sprungartige Formänderung, woraus sich für das nicht fixierte Ende des Aktors **1** ein starker Hub ergibt, verbunden mit vergleichbar großem Arbeitsvermögen. Die Memory-Elemente **2** und **3** eigenen sich daher vorteilhaft zur schnellen Grobjustierung.

Desweiteren ist erfindungsgemäß mit jedem Memory-Element **2** bzw. **3** ein streifenförmiges Thermobimetall-Teil **4.1** bzw. **4.2** mit jeweils unidirektionalem Temperaturgang verbunden, wobei jedes Thermobimetall-Teil **4.1** bzw. **4.2** - ebenso wie die Memory-Elemente **2** bzw. **3** - einzeln direkt oder indirekt beheizbar ist. Der Vorteil der Thermobimetall-Teile **4.1** bzw. **4.2** besteht darin, dass aufgrund der linearen Temperatur-Weg-Abhängigkeit eine präzise Einstellung vorgenommen werden kann. Im Vergleich zu den Memory-Elementen **2** und **3** erfahren die Thermobimetall-Teile **4.1** und **4.2** bei Erwärmung einen weit geringeren Hub, weshalb sie sich hervorragend zur Feinjustierung eignen.

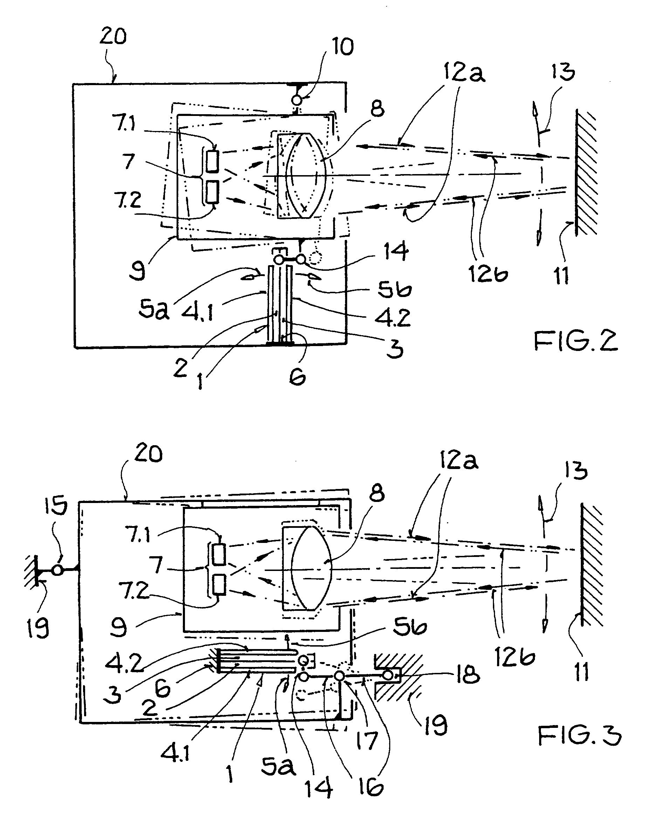

Die Memory-Elemente **2** und **3** sind an einem Ende auf geeignete Art und Weise eingespannt oder fixiert, beispielsweise mittels einer Niet- oder Schraubverbindung **6a** bzw. **6b.** Statt durch zwei Niet- oder Schraubverbindungen **6a** bzw. **6b** können die Memory-Elemente **2** und **3** auch durch eine einzige Niet- oder Schraubverbindung **6** (Fig. 2, 3) fixiert sein.

Bei Erwärmung auf bekannte Art und Weise, beispielsweise durch ein Peltierelement, durch ein vergleichbares Heizelement mit ähnlichen Eigenschaften, durch den ohmschen Widerstand der Memory-Elemente **2** und **3** bzw. der Thermobimetall-Teile **4.1** und **4.2,** durch einen PTC-Widerstand oder eine andere Heizstromquelle oder besonders vorteilhaft durch Mikrowellen oder Infrarot, wie in der DE 38 02 919 A1 beschrieben und hier nicht dargestellt, verformt sich das jeweils beheizte Memory-Element **2** bzw. **3** und/oder das beheizte Thermobimetall-Teil **4.1** bzw. **4.2** und zieht das nicht beheizte Memory-Element **2** bzw. **3** und das nicht beheizte Thermobimetall-Teil **4.1** bzw. **4.2** mit sich, wodurch das nicht fixierte Ende des Memorymetall-Aktors 1 zur einen oder anderen Seite hin ausgelenkt wird, wie in Fig. 1b dargestellt. Erfindungsgemäß sind die Memory-Elemente **2** und **3** und die Thermobimetall-Teile **4.1** und **4.2** derart angeordnet, dass ihre Auslenkung beim Beheizen jeweils entgegen gesetzt gerichtet ist.

Durch die erfindungsgemäße Kombination der Memory-Elemente **2** und **3** mit den Thermobimetall-Teilen **4.1** und **4.2** wurde ein Aktor **1** geschaffen, dessen nicht fixiertes Ende sich bei Erwärmung des Memory-Elements **2** und/oder des Thermobimetall-Teils **4.1** in Richtung eines Pfeils **5a** und bei Erwärmung des Memory-Elements **3** und/oder des Thermobimetall-Teils **4.2** in Richtung eines Pfeils **5b** auslenkt und somit einen Dynamikbereich aufweist, der der Länge eines Pfeils **5** entspricht. Aufgrund der Memorymetall-Thermobimetall-Kombination ist ein Aktor **1** entstanden, der die Vorteile beider Metall-Legierungen aufweist und mit wenig Heizenergie schnell und zudem sehr feinfühlig eingestellt werden kann.

In den **Fig. 1c** bzw. **1d** ist ein zweiter erfindungsgemäßer Aktor **1'** als Stellelement für einen Stellantrieb in Ausgangsstellung bzw. in ausgelenkter Stellung dargestellt. Im Gegensatz zum ersten Aktor **1** der Fig. 1a und 1b werden statt den beiden Thermobimetall-Teilen **4.1** und **4.2** ein einziges, aber dafür stärker dimensioniertes Thermobimetall-Teil **4.3** mit bidirektionalem Temperaturgang verwendet, das zwischen den beiden Memory-Elementen **2** und **3** angeordnet ist. Dabei ist das Thermobimetall-Teil **4.3** entweder an einem Ende durch eine eigene mechanische Verbindung **6c** fixiert, oder für die beiden Memory-Elemente **2** und **3** und das Thermobimetall-Teil **4.3** ist eine gemeinsame Fixierung beispielsweise in Form einer Schraub- oder Nietverbindung vorgesehen.

Die Funktionsweise des Aktors **1'** ist ähnlich wie die des Aktors **1.** Wird das Memory-Element **2** erwärmt, wird das nicht fixierte Ende des Aktors **1'** in Richtung des Pfeils **5a** ausgelenkt; wird das Memory-Element **3** erwärmt, wird das nicht fixierte Ende des Aktors **1'** in Richtung des Pfeils **5b** ausgelenkt. Das nicht fixierte Ende des Thermobimetall-Teils **4.3** mit bidirektionalem Temperaturgang bewegt sich bei Erwärmung entweder in Richtung des Pfeils **5a** oder in Richtung des Pfeils **5b,** je nachdem, wie es orientiert ist.

Der Aktor **1'** weist die gleichen Vorteile wie der Aktor **1** auf, so dass damit ein Stellantrieb mit wenig Heizenergie schnell und zudem sehr feinfühlig eingestellt werden kann. Obwohl in den beiden Anwendungsbeispielen der Fig. 2 und 3 der Aktor **1** eingezeichnet ist, kann dort eben so gut der Aktor **1'** Verwendung finden.

**Fig. 2** zeigt als ein erstes Anwendungsbeispiel für den erfindungsgemäßen Aktor 1 als Teil eines Stellantriebs. Dargestellt ist eine Bildaufnahmeeinrichtung **20** mit einem optischen Sensor **7** und einer Optik **8,** wobei der optische Sensor **7** und die Optik **8** wesentliche Teile eines Bilderfassungssystems **9** darstellen, das in einem Drehpunkt **10** drehbar gelagert ist. Als Bilderfassungssystem **9** wird ein passives Bilderfassungssystem wie CCD-Kamera, CMOS-Kamera, Infrarot-Kamera oder Wärmebildkamera, vorteilhaft jedoch ein aktives Bilderfassungssystem mit Sendeund Empfangsteil eingesetzt. Beim optischen Sensor **7** handelt es sich im Falle des aktiven Bilderfassungssystems vorzugsweise um einen aus der WO 99/60629 A1 bekannten PMD-Sensor (photonic mixer device), der ein Sendeteil **7.1** und Empfangsteil **7.2** aufweist und mit dem modulierte Strahlen **12a** elektromagnetischer bzw. optischer Natur mittels der Optik **8** auf ein Objekt **11** gerichtet werden.

Bei der Optik **8** handelt es sich in der Regel um ein Objektiv; beim Objekt **11** handelt es sich beispielsweise um einen Fahrzeuginsassen auf einem Fahrzeugsitz. Vom Objekt **11** reflektierte Strahlen **12b** gelangen wiederum durch das Objektiv **8** auf den PMD-Sensor **7.** Statt des bevorzugt eingesetzten PMD-Sensors **7** als Teil des aktiven Bilderfassungssystems **9** können auch andere geeignete Bilderfassungssysteme, insbesondere aktive Bilderfassungssysteme, eingesetzt werden.

Durch Verschwenken des Bilderfassungssystems **9** um den Drehpunkt **10** können die Strahlen **12a** bzw. **12b** in Richtung eines Pfeils **13** verschoben werden, um zum Beispiel das Bilderfassungssystem **9** mit Hilfe von Referenz- oder Fixpunkten zu kalibrieren oder zu justieren. Zum Verschwenken um den Drehpunkt **10** ist das Bilderfassungssystem **9** über ein Gelenk oder Getriebe **14** als der eine Teil eines Stellantriebs mit dem frei beweglichen Ende des Aktors **1** (oder 1') als dem anderen Teil des Stellantriebs verbunden; das andere Ende des Aktors **1** ist mittels der Befestigung **4** in geeigneter Weise fixiert, beispielsweise durch Verbinden mit dem Gehäuse der Bildaufnahmeeinrichtung **20.**

Wird ein Memory-Element **2, 3** und/oder ein Thermobimetall-Teil **4.1** oder **4.2** bzw. **4.3** des Aktors **1** bzw. **1'** auf geeignete und bereits beschriebene Art erwärmt, so schwenkt das nicht fixierte Ende des Aktors **1** bzw. **1'** in Richtung des Pfeils **5a** oder **5b** aus. Durch die zugeführte Wärme kann die Größe der Verschwenkung bzw. der zurück gelegte Weg des nicht fixierten Endes des Aktors **1** bzw. **1'** genau bestimmt werden. Die Verschwenkung bzw. der zurück gelegte Weg des nicht fixierten Endes des Aktors **1** bzw. **1'** wird über das Gelenk oder Getriebe **14** übertragen und somit das Bilderfassungssystem **9** um den Drehpunkt **10** ausgelenkt. Durch den aus Aktor **1** bzw. **1'** und Gelenk oder Getriebe **14** bestehenden Stellantrieb wird letztendlich die Abtastbewegung des Bilderfassungssystems **9** in Richtung des Pfeils **13** gezielt verändert.

Der übersichtlichen Darstellung wegen beschränkt sich dieses Anwendungsbeispiel auf die eindimensionale Veränderung der Abtastbewegung des Bilderfassungssystems **9.** Es ist dem Fachmann jedoch ohne weiteres möglich, das gezeigte Prinzip auf eine zwei- oder dreidimensionale Veränderung der Abtastbewegung des Bilderfassungssystems **9** zu erweitern.

In **Fig. 3** ist ein zweites Anwendungsbeispiel für den erfindungsgemäßen Aktor **1** (oder **1'**) eines Stellantriebs für eine Bildaufnahmeeinrichtung **20** dargestellt. Die Bildaufnahmeeinrichtung **20** setzt sich wiederum im wesentlichen aus einem optischen Sensor **7,** vorzugsweise einem PMD-Sensor mit Sendeteil **7.1** und Empfangsteil **7.2,** und einer Optik **8,** in der Regel ein Objektiv, zusammen. PMD-Sensor **7** und Objektiv **8** sind wesentliche Teile eines vorteilhaft aktiven Bilderfassungssystems **9,** das Strahlen **12a** gegen ein Objekt **11** sendet und vom Objekt **11** reflektierte Strahlen **12b** empfängt.

Im Gegensatz zum ersten Anwendungsbeispiel der Fig. 2 wird nicht nur das Bilderfassungssystem **9** verschwenkt, um die Abtastbewegung des Bilderfassungssystems **9** in Richtung des Pfeils **13** zu verändern, sondern die gesamte Bildaufnahmeeinrichtung **20,** was aus praktischen Gründen vorteilhafter sein kann. Die Bildaufnahmeeinrichtung **20** ist zum Verschwenken in einem Drehpunkt **15** drehbar gelagert. Der Memorymetall-Aktor **1** ist mit einem Ende durch eine bereits beschriebene Verbindung **4** in geeigneter Weise fixiert, während das nicht fixierte Ende des Memorymetall-Aktors **1** durch Erwärmen auf bereits beschriebene Weise in Richtung der Pfeile **5a** bzw. **5b** ausgelenkt werden kann.

Mittels des Gelenks oder Getriebes **14** wird diese Auslenkung auf eine Seite eines zweiseitigen Hebels **16** übertragen, der in einem Drehpunkt **17** drehbar gelagert ist. Die andere Seite des zweiseitigen Hebels **16** ist auf geeignete Weise beispielsweise in einer parallelen Ausnehmung (Nut) **18** gelagert, wobei die Nut **18** zum Beispiel in eine Halterung **19** für die Bildaufnahmeeinrichtung **20** eingearbeitet ist. Durch Beheizen entweder des Memory-Elements **2** oder **3** und/oder des Thermobimetall-Teils **4.1** oder **4.2** bzw. **4.3** wird die daraus folgende Auslenkung des nicht fixierten Endes des Memorymetall-Aktors **1** über den Hebel **16** auf die gesamte Bildaufnahmeeinrichtung **20** übertragen, wodurch sich die Abtastbewegung des Bilderfassungssystems **9** in Richtung des Pfeils **13** verändert.

Die Erfindung zeigt ein geräuschloses und kostengünstiges Stellelement (Aktor) aus einer Memorymetall-Thermobimetall-Kombination, das als Teil eines Stellantriebs beispielsweise zur schnellen und dynamischen Feinjustage der Ausrichtung einer Bildaufnahmeeinrichtungen für die Sitzbelegungserkennung in einem Fahrzeug geeignet ist. Die dynamische Feinjustage der Ausrichtung einer Bildaufnahmeeinrichtungen ist beispielsweise notwendig, um durch Temperaturdrift, Materialdehnung, Vibrationen im unteren Frequenzbereich infolge von Fahrgeräuschen oder auch durch Fahrbewegungen hervorgerufene Veränderungen auszugleichen.

## Patentansprüche

1. Stellelement (1), insbesondere als Teil eines Stellantriebs für eine Bildaufnahmeeinrichtung (20) mit einem Bilderfassungssystem (9), **dadurch gekennzeichnet, dass** sich die Ausrichtung der Bildaufnahmeeinrichtung (20) auf ein Objekt (11) verändern lässt, dass das Stellelement (1) aus zwei Memory-Elementen (2, 3) mit Einwegeffekt und wenigstens einem Thermobimetall-Teil (4.1, 4.2, 4.3) besteht, wobei die Memory-Elemente (2, 3) und das wenigstens eine Thermobimetall-Teil (4.1, 4.2, 4.3) einzeln beheizbar sind und dass die Auslenkung der Memory-Elemente (2, 3) beim Beheizen entgegen gesetzt gerichtet ist.

2. Stellelement (1) nach Anspruch 1, **dadurch gekennzeichnet, dass** die beiden Memory-Elemente (2, 3) und das wenigstens eine Thermobimetall-Teil (4.1, 4.2, 4.3) einseitig eingespannt sind.

3. Stellelement (1) nach Anspruch 1 oder 2, **dadurch gekennzeichnet, dass** das wenigstens eine Thermobimetall-Teil (4.1, 4.2, 4.3) mit den beiden Memory-Elementen (2, 3) verbundenen ist.

4. Stellelement (1) nach einem der Ansprüche 1 bis 3, **dadurch gekennzeichnet, dass** das wenigstens eine Thermobimetall-Teil (4.1, 4.2, 4.3) einen bidirektionalen Temperaturgang aufweist.

5. Stellelement (1) nach einem der Ansprüche 1 bis 4, **dadurch gekennzeichnet, dass** das wenigstens eine Thermobimetall-Teil (4.1, 4.2, 4.3) einen unidirektionalen Temperaturgang aufweist.

6. Stellelement (1) nach einem der Ansprüche 1 bis 5, **dadurch gekennzeichnet, dass** das Stellelement (1) die Ausrichtung der Bildaufnahmeeinrichtung (20) durch Verschwenken des Bilderfassungssystems (9) verändert.

7. Stellelement (1) nach einem der Ansprüche 1 bis 5, **dadurch gekennzeichnet, dass** das Stellelement (1) die Ausrichtung der Bildaufnahmeeinrichtung (20) durch Verschwenken der gesamten Bildaufnahmeeinrichtung (20) verändert.

8. Stellelement (1) nach einem der Ansprüche 1 bis 7, **dadurch gekennzeichnet, dass** zwischen Stellelement (1) und Bilderfassungssystem (9) ein Gelenk oder Getriebe (14) angeordnet ist.

9. Stellelement (1) nach einem der Ansprüche 1 bis 8, **dadurch gekennzeichnet, dass** zur Kalibrierung oder Justierung der Bildaufnahmeeinrichtung (20) Referenzoder Fixpunkte vorhanden sind.

10. Verwendung des Stellelements (1) nach einem der Ansprüche 1 bis 9 als Teil eines Stellantriebs für eine aktive Bildaufnahmeeinrichtung (20) wie PMD-Sensor.

11. Verwendung des Stellelements (1) nach einem der Ansprüche 1 bis 9 als Teil eines Stellantriebs für eine passive Bildaufnahmeeinrichtung (20) wie CCD-Kamera, CMOS-Kamera, Infrarot-Kamera oder Wärmebildkamera.
